# EUROPÄISCHE PATENTSCHRIFT

(11) **EP 0 763 316 B1**
(45) Veröffentlichungstag und Bekanntmachung des Hinweises auf die Patenterteilung: **29.11.2000**
(21) Anmeldenummer: 96112255.3
(22) Anmeldetag: 30.07.1996
(51) Int. Cl.: A01C 7/08, A01C 15/04

(54) **Landwirtschaftliche Verteilmaschine**
Agricultural distributor
Distributeur agricole

(30) Priorität: 17.10.1995 DE 19538626; 15.09.1995 DE 19534094
(43) Veröffentlichungstag der Anmeldung: 19.03.1997
(73) Patentinhaber: Amazonen-Werke H. Dreyer GmbH & Co. KG, 49205 Hasbergen (DE)
(72) Erfinder: Siefken, Claus, 27777 Ganderkesee (DE)

(56) Entgegenhaltungen:
- EP-A- 0 252 348
- DE-U- 9 313 779
- GB-A- 2 282 948

## Beschreibung

Die Erfindung betrifft eine landwirtschaftliche pneumatische Verteilmaschine gemäß des Oberbegriffes des Patentanspruches 1.

Eine derartige Verteilmaschine ist durch die europäische Patentanmeldung 02 52 348 bekannt geworden. Diese landwirtschaftliche Verteilmaschine weist ein zentrales Dosierorgan auf, welches das zu verteilende Gut aus einem Vorratsbehälter in eine pneumatische Förderleitung fördert. Über diese pneumatische Förderleitung gelangt das Gut zu einem Verteilerkopf, von dem es aus an ihm angeschlossenene Leitungen, die zu Säscharen führen, gleichmäßig aufgeteilt wird. Einigen dieser Verteilerleitungen sind Absperreinrichtungen zugeordnet, die so geschaltet sein können, daß die Förderung des Verteilgutes zu dem jeweils zugehörigen Schar unterbunden wird und statt dessen in eine zugehörige Rückleitung geleitet wird, die im Vorratsbehälter mündet. Nachteilig ist bei dieser Anordnung der Rückführleitung, daß diese an irgendeiner Stelle im Vorratsbehälter mündet. Insbesondere wenn der Vorratsbehälter noch fast ganz gefüllt ist, bereitet die Rückführung des Saatgutes in den Vorratsbehälter bei dieser Anordnung Probleme.

Der Erfindung liegt die Aufgabe zugrunde, eine einfache und störungsfreie Rückführung des Verteilgutes auch bei ganz oder halb gefülltem Vorratsbehälter zu gewährleisten.

Diese Aufgabe wird erfindungsgemäß durch die kennzeichnenden Merkmale des Anspruches 1 gelöst. Infolge dieser Maßnahme wird auf einfachste Weise eine störungsfreie Rückführung des Vergutes in den Vorratsbehälter bei jedem Füllstandvolumen des Vorratsbehälters ermöglicht. Somit wird auf einfache Weise das Verteilgut von mehreren abgesperrten Verteilerleitungen in den Vorratsbehälter zurückgeführt. Es ergibt sich eine einfache Rückführung des von mehreren Absperreinrichtungen abgeleiteten Verteilgutes in den Vorratsbehälter.

Um sicherzustellen, daß das zurückgeleitete Verteilgut aus der Rückleitung abgezogen wird, so daß während der Ausbringarbeit eine ausreichend freie Puffer- und Aufnahmekapazität in der Rückleitung vorhanden ist, ist vorgesehen, daß die Mündung der Rücklaufleitung bezüglich der Dosiervorrichtung derart positioniert ist, daß vorrangig aus der Rückleitung das in diese zurückgeleitet Verteilgut durch die Dosiervorrichtung entnommen wird.

Eine einfache Ausbildung der Absperreinrichtung läßt sich dadurch verwirklichen, daß die Absperreinrichtung als umstellbare Weiche ausgebildet ist.

Hierbei kann vorgesehen sein, daß der Sammelbehälter eine umstellbare Weiche aufweist, daß in der einen Stellung der Weiche die Verteilerleitungen zu den Säscharen mittels der Weiche durchgehend verbunden sind, während in der anderen Stellung diese Verteilerleitungen mittels der Weiche mit der Rückleitung verbunden sind.

Um einen störungsfreien Betrieb der Verteilmaschine bei allen möglichen Einsatzverhältnissen zu gewährleisten, kann vorgesehen sein, daß dem Sammelbehälter ein Luftentweichungssystem, beispielsweise ein Luftabschalter, beispielsweise in Form eines Zyklons zugeordnet ist.

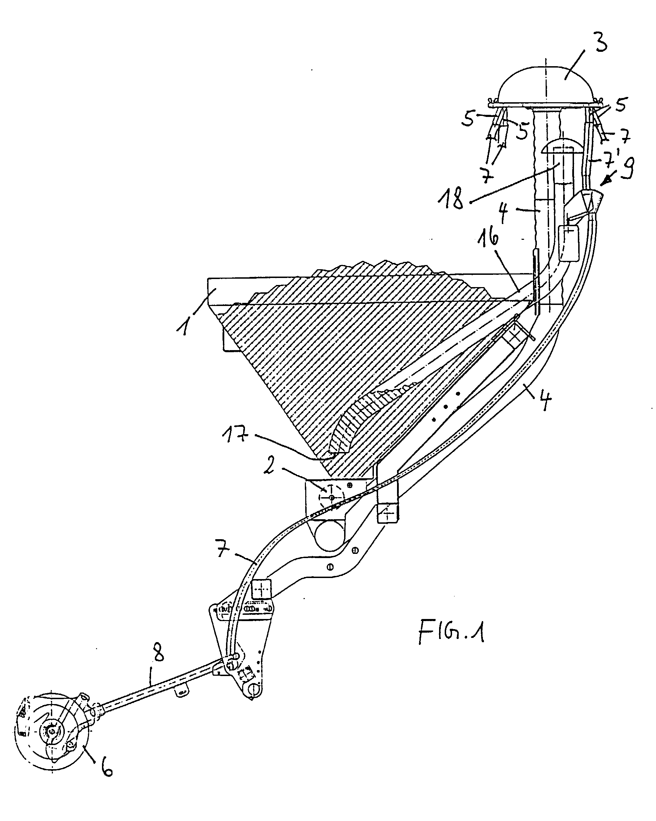

Weitere Einzelheiten der Erfindung sind der Beispielsbeschreibung und den Zeichnungen zu entnehmen. Hierbei zeigen
- Fig. 1: das Verteil- und Ausbringsystem einer pneumatischen Verteilmaschine in Seitenansicht und Prinziparstellung,

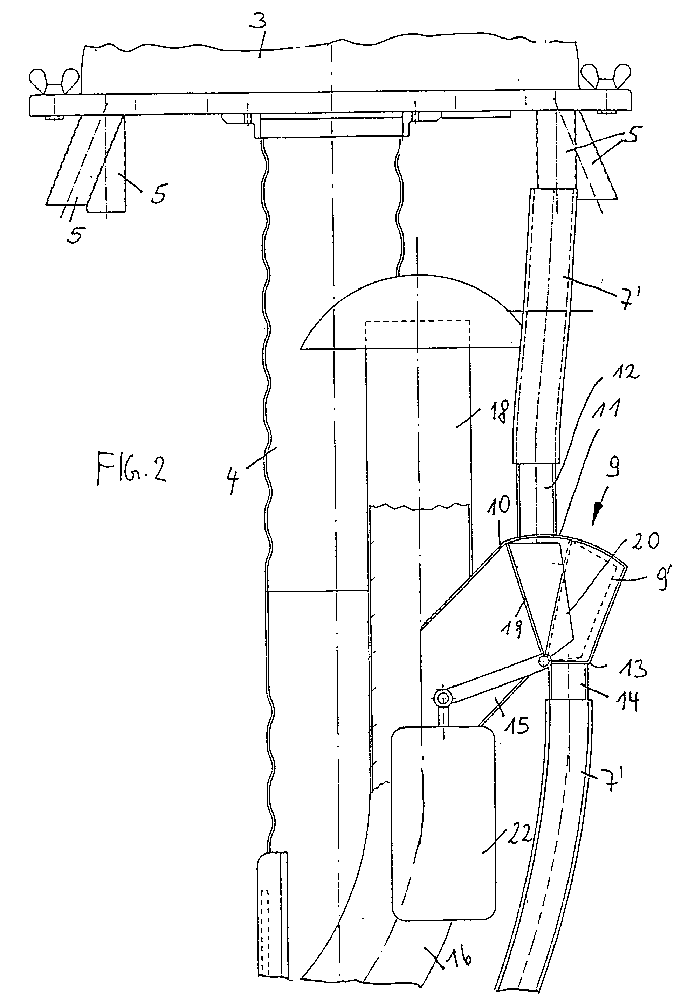

- Fig. 2: die Anordnung des Verteilerkopfes mit der Absperreinrichtung in vergrößerter Darstellung und in Prinzipdarstellung,

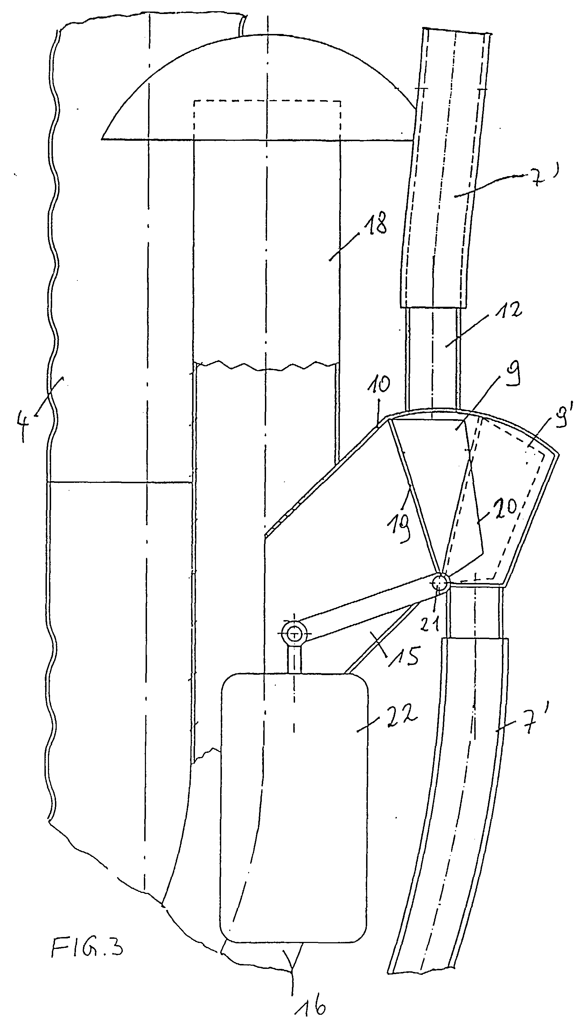

- Fig. 3: die Anordnung der Absperreinrichtung in vergrößerter Darstellung,

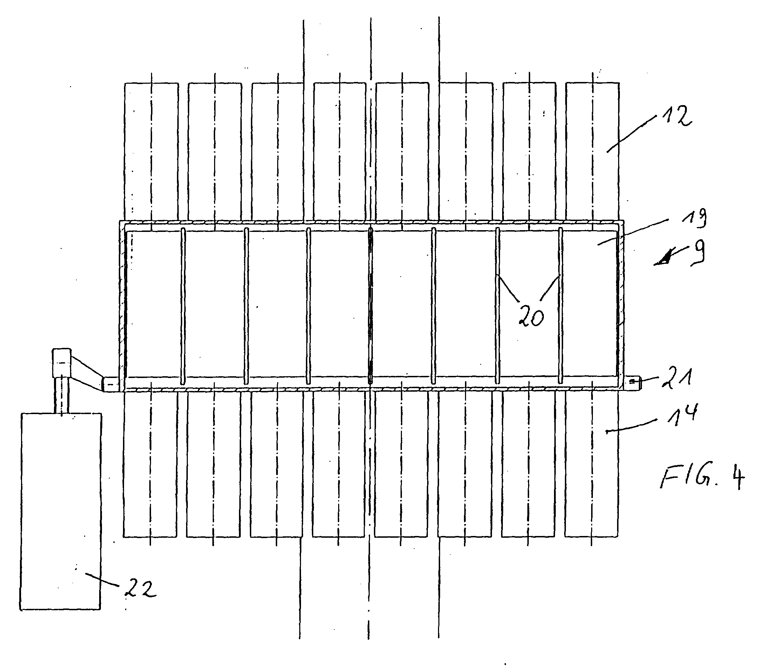

- Fig. 4: die Absperreinrichtung in der Ansicht VI - VI und

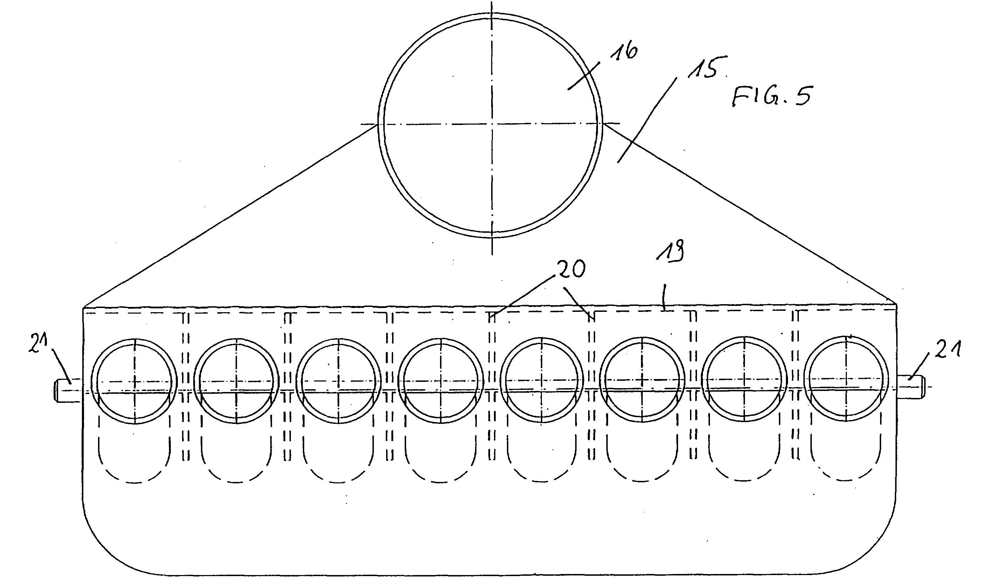

- Fig. 5: die Absperreinrichtung in der Ansicht V - V.

Die als pneumatische Drillmaschine ausgebildete landwirtschaftliche Verteilmaschine weist den Vorratsbehälter 1, die zentrale Dosiereinrichtung 2, das an einem nicht dargestellten Gebläse angeschlossene und zu einem Verteilerkopf 3 führende Förderrohr 4 auf. Der Verteilerkopf 3 weist eine Vielzahl von Abgängen 5 auf, an die die zu den Säscharen 6 führenden Verteilerleitungen 7 angeschlossen sind. Jeder Verteilerleitung 7 wird eine Teilmenge des Verteilgutes vom Verteilerkopf 3 zugeteilt. Die Ausbringelemente sind im Ausführungsbeispiel als Säschare 6 ausgebildet. Jede Verteilerleitung 7 ist an dem Säscharhalter 8 angeordnet, wobei das letzte Stück der Verteilerleitung 7 von dem Säscharhalterohr 8 ausgebildet wird. Eine Anzahl von Verteilerleitungen 7', im Ausführungsbeispiel acht Verteilerleitungen 7', ist eine Absperreinrichtung 9 zugeordnet. Diese Absperreinrichtung 9 ist als umstellbare Weiche ausgebildet.

Diese umstellbare Weiche 9 ist in einem Sammelbehälter 10 angeordnet. Der Sammelbehälter 10 weist auf seiner einen Seite 11 eine Anzahl von Anschlußelementen 12 auf, an die die Verteilerleitungen, die das Verteilgut wahlweise nicht den Ausbringelementen 6 zuführen sollen, angeschlossen sind. Auf der anderen Seite 13 des Sammelbehälters 10 sind ebenfalls Anschlüsse 14 vorgesehen, an die die Verteilerleitungen 7, die zu den Säscharen 6 weiterführen, angeschlossen sind. Desweiteren schließt an der Unterseite der Weiche 9 an dem Sammelbehälter 10 ein Trichter 15 an, der an eine Rückleitung 16, die in den Vorratsbehälter 1 führt, angeschlossen ist. Diese Rückleitung 16 ist in dem Bereich der Dosiereinrichtung 2 geführt und endet mit ihrer Mündung 17 in einem Bereich oberhalb der Dosiereinrichtung 2, in welchem das Saatgut von der Dosiereinrichtung 2 vorrangig aus dem Sammel behälter 10 abgezogen wird. Hierdurch wird sichergestellt, daß das in die Rückleitung 16 zurückgeleitete Verteilgut vorrangig gegenüber dem Saatgut aus dem Vorratsbehälter 1 gezogen wird, damit immer eine ausreichende Aufnahmekapazität in der Rückleitung für das in diese zurückgeleiteteVerteilgut vorhanden ist. Wenn in der Rückleitung 16 kein Verteilgut mehr vorhanden ist, wird das Verteilgut ausschließlich aus dem Vorratsbehälter 1 abgezogen. Die Rückleitung 16 ist so angeordnet, daß dann das Verteilgut ungestört zu der Dosiereinrichtung 2 gelangt.

An dem Sammelelement 10 münden in die von den Absperreinrichtungen 9 abgehenden Rückleitungen 7', so daß die abzusperrenden Leitungen 7' gruppenweise an die Absperreinrichtung 9 zusammengefaßt angeschlossen sind und münden so in eine gemeinsame in den Vorratsbehälter 1 mündende Rückleitung 16, wenn die Weiche 9 entsprechend eingestellt ist.

In der einen Stellung (mit durchzogenen Linien dargestellt) der Weiche 9 sind die Verteilerleitungen 7' zu den Säscharen 6 mittels der Weiche 9 durchgehend verbunden, während in der anderen Stellung (mit gestrichelten Linien dargestellt) diese Verteilerleitungen 7' mittels der Weiche 9' mit der Rückleitung 16 verbunden sind.

Desweiteren ist an dem Sammelbehälter 10 bzw. die Rückleitung 16 ein Luftentweichungssystem, das im Ausführungsbeispiel als Luftabscheider 18 und Zyklon ausgebildet ist, angeschlossen, damit die Luft bei der Stellung der Weiche 9 in der Absperrstellung 9' entweichen kann.

Die Weiche 9 besteht aus einem plattenförmigen Element 19, an dem die einzelnen Leitungsbereiche durch auf dieser Platte 19 angebrachten Stege 20 gebildet werden.

Die Weiche 9 ist mittels der Zapfen 21 an dem Sammelbehälter 10 schwenkbar gelagert und wird durch das Betätigungselement 22, z.B. einem Hydraulikzylinder, einem Elektromotor, einem Elektromagneten usw. von einer Schalteinrichtung in bestimmter Weise betätigt. Durch diese Absperreinrichtung läßt sich beispielsweise eine Fahrgassenschaltung, Teilbreitenabschaltung usw. realisieren.

## Patentansprüche

1. Landwirtschaftliche pneumatische Verteilmaschine zum Verteilen eines vorzugsweise körnigen Verteilgutes, insbesondere eines Saatgutes oder Düngers, während des Ausbringens aus einem Vorratsbehälter (1) auf einem Acker, mit einer Dosiervorrichtung (2) für die dosierte pneumatische Förderung des Verteilgutes aus dem Vorratsbehälter (1) über eine Zuleitung (4) zu einem Verteilerkopf (3), und mit an dem Verteilerkopf (3) angeschlossenen Verteilerleitungen (7) zur pneumatischen Förderung von jeweils einer Teilmenge des Verteilgutes zu jeweils einem Ausbringelement (6) für das Verteilgut, insbesondere zu einem Säschar oder einem Düngerstreuer, wobei ein Teil der Verteilerleitungen (7') an ihren Abgängen (5) oder im Bereich der Abgänge aus dem Verteilerkopf (3) mit Absperreinrichtungen (9) versehen ist, die so schaltbar sind, daß die Förderung des Verteilgutes zu dem jeweils zugehörigen Ausbringelement (6) unterbunden ist und statt dessen eine jeweils zugehörige Rückleitung (16) geöffnet ist, über welche das Verteilgut in den Vorratsbehälter (1) zurückleitbar ist, dadurch gekennzeichnet, daß die Rückleitung (16) in den Bereich der Dosiereinrichtung (2) geführt ist und in einem Bereich oberhalb der Dosiereinrichtung (2) endet, in welchem das Saatgut von der Dosiereinrichtung (2) aus dem Vorratsbehälter (1) abgezogen wird, daß die von den Absperreinrichtungen (9) abgehenden Verteilerleitungen (7') in einen Sammelbehälter (10) münden, an welchem alle oder gruppenweise zusammengefaßt an die Absperreinrichtung (9) angeschlossenen Verteilerleitungen (7') angeschlossen sind, und daß an dem Sammelbehälter (10) eine gemeinsame in dem Vorratsbehälter (1) mündende Rückleitung (16) angeschlossen ist.

2. Verteilmaschine nach Anspruch 1, dadurch gekennzeichnet, daß die Mündung (17) der Rückleitung (16) bezüglich der Dosiereinrichtung (2) derart positioniert ist, daß vorrangig aus der Rückleitung (16) das in diese zurückgeleitete Verteilgut entnommen wird.

3. Verteilmaschine nach Anspruch 1, dadurch gekennzeichnet, daß die Absperreinrichtung als umstellbare Weiche (9) ausgebildet ist.

4. Verteilmaschine nach Anspruch 1, dadurch gekennzeichnet, daß der Sammelbehälter (10) eine umstellbare Weiche (9) aufweist, daß in der einen Stellung (9) der Weiche die Verteilerleitungen (7') zu den Ausbringelementen (6) mittels der Weiche durchgehend verbunden sind, während in der anderen Stellung (9') diese Verteilerleitungen (7') mittels der Weiche mit der Rückleitung (16) verbunden sind.

5. Verteilmaschine nach einem oder mehreren der vorstehenden Ansprüche 1 oder 4, dadurch gekennzeichnet, daß dem Sammelbehälter (10) ein Luftentweichungssystem (18), beispielsweise ein Luftabscheider, beispielsweise in Form eine Zyklons, angeordnet ist.

## Claims

1. Agricultural pneumatic distributor for distributing a preferably granular material to be distributed, more especially seeds or fertilizer, during the broadcasting of a field from a hopper (1), said distributor having a metering arrangement (2) for the metered pneumatic conveyance of the material to be distributed from the hopper (1) via a supply line (4) to a distributor head (3), and having distribution lines (7), which communicate with the distributor head (3), for the pneumatic conveyance of a respective portion of the material to be distributed to a respective distributing member (6) for the material to be distributed, more especially to a sowing coulter or to a fertilizer broadcaster, some of the distribution lines (7') being provided with shut-off arrangements (9) at their outlets (5) or in the region of the outlets from the distributor head (3), said shut-off arrangements being so switchable that the material to be distributed is prevented from being conveyed to the respective associated distributing member (6) and, instead, a respective associated return line (16) is opened, the material to be distributed being returnable to the hopper (1) via said return line, characterised in that the return line (16) extends into the region of the metering arrangement (2) and terminates in a region above the metering arrangement (2), in which region the seeds are discharged from the hopper (1) by the metering arrangement (2), in that the distribution lines (7'), which depart from the shut-off arrangements (9), terminate in a storage tank (10), which communicates with all of the distribution lines (7') or, when said distribution lines are combined in groups, communicates with the distribution lines (7') communicating with the shut-off arrangement (9), and in that the storage tank (10) communicates with a common return line (16), which terminates in the hopper (1).

2. Distributor according to claim 1, characterised in that the aperture (17) of the return line (16) is positioned relative to the metering arrangement (2) in such a manner that the material to be distributed, which has been returned to the return line (16), is mainly removed from said return line.

3. Distributor according to claim 1, characterised in that the shut-off arrangement is configured as a reversible deflector (9).

4. Distributor according to claim 1, characterised in that the storage tank (10) includes a reversible deflector (9), in that the distribution lines (7') leading to the distributing members (6) are continuously connected by means of the deflector in one position (9) of the deflector, while these distribution lines (7') are connected to the return line (16) by means of the deflector in the other position (9').

5. Distributor according to one or more of the preceding claims 1 or 4, characterised in that an air venting system (18), for example an air separator, for example in the form of a cyclone, is disposed in the storage tank (10).

## Revendications

1. Distributeur agricole pneumatique pour distribuer de préférence des produits en forme de grains, notamment des semences ou des engrais, l'épandage se faisant sur le champ à partir d'un réservoir (1), comprenant
- un dispositif de dosage (2) pour le transfert pneumatique dosé du produit à distribuer provenant du réservoir (1) par une conduite d'alimentation (4) vers une tête distributrice (3) et
- des conduites distributrices (7) reliées à la tête distributrice (3) pour le transfert pneumatique d'une quantité partielle de produit à distribuer vers chaque élément d'épandage (6) pour le produit à distribuer, notamment un sac de semoir ou un épandeur d'engrais,
- une partie des conduites distributrices (7') étant munie à leur sortie (5) ou dans la zone des sorties de la tête distributrice (3), d'installations de fermeture (9) qui peuvent être commutées pour que le transfert du produit à distribuer vers les éléments d'épandage (6) respectifs soit coupé et qu'au lieu de cela une conduite de retour (16) correspondante soit ouverte par laquelle le produit à distribuer revient dans le réservoir (1)
caractérisé en ce que
- la conduite de retour (16) débouche, dans la zone de l'installation de dosage (2) et se termine dans la zone au-dessus de l'installation de dosage (2), zone dans laquelle les produits à distribuer sont pris par l'installation de dosage (2) dans le réservoir (1),
- les conduites distributrices (7') partant des installations de fermeture (9) débouchent dans un collecteur (10) qui regroupe toutes les conduites distributrices ou un groupe de conduites distributrices (7') relié à l'installation de fermeture (9), et
- une conduite de retour (16), commune, débouchant dans le réservoir (1), est reliée au collecteur (10).

2. Distributeur selon la revendication 1,
caractérisé en ce que
l'embouchure (17) de la conduite de retour (16) est positionnée par rapport à l'installation de dosage (2) pour que le produit à distribuer, reconduit par cette conduite de retour (16), soit repris de manière prioritaire.

3. Distributeur selon la revendication 1,
caractérisé en ce que
l'installation de fermeture est réalisée par un moyen d'aiguillage commutable (9).

4. Distributeur selon la revendication 1,
caractérisé en ce que
le collecteur (10) comporte un moyen d'aiguillage commutable (9) qui, dans une position (9) relie les conduites distributrices (7') aux éléments d'épandage (6) par l'intermédiaire du moyen d'aiguillage alors que dans son autre position (9'), les conduites distributrices (7') sont reliées par le moyen d'aiguillage à la conduite de retour (16).

5. Distributeur selon une ou plusieurs des revendications 1 ou 4,
caractérisé en ce que
le collecteur (10) comporte un système d'échappement pneumatique (18), par exemple un séparateur d'air, sous la forme d'un cyclone.
